# EUROPÄISCHE PATENTANMELDUNG

(11) **EP 3 547 389 A1**
(43) Veröffentlichungstag der Anmeldung: **02.10.2019**
(21) Anmeldenummer: 19153475.9
(22) Anmeldetag: 24.01.2019
(51) Int. Cl.: H01M 2/02, C23C 18/20, C23C 18/32, C25D 3/12, C25D 5/02, C25D 5/14, C25D 7/04, H01M 10/0525, H01M 10/058

(54) **VERFAHREN ZUM FERTIGEN EINES GEHÄUSES EINER BATTERIEZELLE SOWIE ENTSPRECHENDES GEHÄUSE UND BATTERIEZELLE**

(30) Priorität: 28.03.2018 DE 102018204699
(71) Anmelder: Robert Bosch GmbH, 70442 Stuttgart (DE)
(72) Erfinder: Poller, Silvan, 02829 Neisseaue Ot Kaltwasser (DE); Ringel, Anton, 96052 Bamberg (DE); Kaiser, Rudi, 96049 Bamberg (DE); Ringk, Andreas, 96047 Bamberg (DE); Arzberger, Arno, 96129 Strullendorf (DE)

(57) **Zusammenfassung**

Es wird ein Verfahren zum Fertigen eines Gehäuses einer Batteriezelle beschrieben. Das Verfahren umfasst zumindest die folgenden Schritte:
(i) Bereitstellen eines Metallblechs (13); (ii) Umformen des Metallblechs (13), beispielsweise durch Tiefziehen, in eine Gehäusekomponente (5) mit gekrümmter Form; und (iii) Zusammensetzen des Gehäuses (3) unter Einbeziehung der Gehäusekomponente (5). Das Verfahren zeichnet sich dadurch aus, dass die Gehäusekomponente (5) nach dem Umformen zumindest an Teilbereichen (21) ihrer Oberfläche mit einer Korrosionsschutzschicht (29) versehen wird. Hierdurch können Durchgangsöffnungen (25), welche sich insbesondere in Teilbereichen (21), die beim Umformen stark gekrümmt worden sind, gebildet haben, durch die nachträglich abgeschiedene Korrosionsschutzschicht (29) abgedeckt werden. Korrosion an dem Gehäuse (3) kann hiermit zuverlässig vermieden werden.

## Beschreibung

### Gebiet der Erfindung

Die Erfindung betrifft ein Verfahren zum Fertigen eines Gehäuses einer Batteriezelle sowie ein entsprechend fertigbares Gehäuse und eine damit ausgestattete Batteriezelle.

### Stand der Technik

Batteriezellen dienen dazu, Energie in chemischer Form zu speichern. Hierzu sind in einem Gehäuse einer Batteriezelle Elektroden sowie ein Elektrolyt, welcher heutzutage meist in flüssiger Form vorliegen kann, aufgenommen. Das Gehäuse umschließt darin aufgenommene Komponenten hermetisch dicht.

Das Gehäuse oder Gehäusekomponenten, aus denen das Gehäuse zusammengesetzt ist, bestehen im Allgemeinen aus Metall. Dies trifft insbesondere für Batteriezellen zu, bei denen das Gehäuse oder Teile davon elektrisch mit einer der Elektroden verbunden ist und somit einen von außen her elektrisch kontaktierbaren Pol der Batteriezelle bildet.

Das Gehäuse bzw. dessen Gehäusekomponenten werden meist aus einem Metallblech gebildet. Das ursprünglich ebene Metallblech wird hierzu in eine gekrümmte Form umgeformt, beispielsweise im Rahmen eines Tiefziehprozesses oder eines Fließpressprozesses.

Um das Gehäuse bzw. dessen Gehäusekomponenten vor Korrosion zu schützen, werden diese aus Metallblech gebildet, welches zuvor mit einer vor Korrosion schützenden Schicht beschichtet wurde. Beispielsweise werden Stahlbleche verwendet, die zuvor mit einer dünnen Nickelschicht beschichtet wurden. Besonders geeignet für die Herstellung von Gehäusen für Batteriezellen sind Bleche aus *HILUMIN*®*,* bei denen es sich um einen diffusionsgeglühten, elektrolytisch vernickelten Bandstahl handelt.

Es wurde beobachtet, dass bei Batteriezellen mit herkömmlich gefertigten Gehäusen Probleme betreffend eine Haltbarkeit der Batteriezellen auftreten können.

### Offenbarung der Erfindung

Vor diesem Hintergrund wird ein Verfahren zum Fertigen eines Gehäuses einer Batteriezelle sowie ein Gehäuse einer Batteriezelle und eine damit ausgestattete Batteriezelle gemäß den unabhängigen Ansprüchen beschrieben. Vorteilhafte Ausgestaltungen sind in den abhängigen Ansprüchen und der nachfolgenden Beschreibung angegeben.

### Vorteile der Erfindung

Ausführungsformen der vorliegenden Erfindung können in vorteilhafter Weise ermöglichen, ein Gehäuse einer Batteriezelle zu fertigen, welches eine lange Haltbarkeit der Batteriezelle bewirkt.

Gemäß einem ersten Aspekt der Erfindung wird ein Verfahren zum Fertigen eines Gehäuses einer Batteriezelle vorgeschlagen. Dabei wird zuerst ein Metallblech bereitgestellt. Anschließend wird das Metallblech in eine Gehäusekomponente mit einer gekrümmten Form umgeformt, beispielsweise durch einen Tiefziehprozess. Dann wird das Gehäuse unter Einbeziehung der umgeformten Gehäusekomponente zusammengesetzt. Ergänzend zu den genannten Verfahrensschritten können weitere Verfahrensschritte durchgeführt werden. Das Verfahren zeichnet sich dadurch aus, dass die Gehäusekomponente nach dem Umformen zumindest an Teilbereichen ihrer Oberfläche mit einer Korrosionsschutzschicht versehen wird.

Gemäß einem zweiten Aspekt der Erfindung wird ein Gehäuse einer Batteriezelle beschrieben, bei dem wenigstens eine Gehäusekomponente eine gekrümmte Form aufweist. Die Gehäusekomponente weist zumindest in signifikant gekrümmten ersten Teilbereichen an ihrer Oberfläche eine doppellagige Korrosionsschutzschicht mit einer ersten Korrosionsschutzschicht und einer darüberliegenden zweiten Korrosionsschutzschicht auf. Die erste Korrosionsschutzschicht weist lokale Durchgangsöffnungen auf, wohingegen die zweite Korrosionsschutzschicht durchgängig, das heißt frei von Öffnungen bzw. porenfrei, ist.

Ein dritter Aspekt der Erfindung betrifft eine Batteriezelle mit einem Gehäuse gemäß einer Ausführungsform des zweiten Aspekts der Erfindung.

Ideen zu Ausführungsformen der vorliegenden Erfindung können unter anderem als auf den nachfolgend beschriebenen Gedanken und Erkenntnissen beruhend angesehen werden.

Wie einleitend angemerkt wurden bei Batteriezellen, deren Gehäuse in herkömmlicher Weise hergestellt wurden, teilweise Mängel bezüglich einer Langlebigkeit beobachtet. Bei genauerer Untersuchung wurde nun erkannt, dass diese Mängel auf lokal begrenzte Korrosionserscheinungen an dem Gehäuse zurückzuführen sein könnten. Es wird vermutet, dass beim Umformen des für eine Gehäusekomponente verwendeten Metallblechs eine daran vorgesehene Korrosionsschutzschicht lokal beschädigt werden kann. An beschädigten Stellen kann die Korrosionsschutzschicht daraufhin durch die Korrosionsschutzschicht hindurchreichende Risse, Poren oder sonstige Öffnungen aufweisen. Durch diese Öffnungen kann Feuchtigkeit und/oder Sauerstoff an das darunterliegende Metall des Bleches gelangen, sodass es letztendlich zu lokalen Korrosionserscheinungen kommen kann.

Um die genannte Problematik zu vermeiden, wird vorgeschlagen, den Fertigungsprozess zu modifizieren bzw. zu ergänzen. Insbesondere wird vorgeschlagen, eine Korrosionsschutzschicht an Teilbereichen einer Gehäusekomponente auszubilden, nachdem diese Gehäusekomponente durch Umformen des Metallblechs in ihre gekrümmte Form gebracht wurde. Anders ausgedrückt bedeutet dies für den Fall, dass die Gehäusekomponenten z.B. durch Tiefziehen umgeformt werden, dass nach dem Umformprozess eine Korrosionsschutzschicht zumindest auf Teilbereiche der Oberfläche der Gehäusekomponente aufgebracht wird.

Eine derart nachträglich aufgebrachte Korrosionsschutzschicht wird im Allgemeinen nicht einem, wie beim Umformen des Metallblechs auftretenden, hohen mechanischen Stress unterzogen. Dementsprechend kann die Korrosionsschutzschicht nicht nur durchgängig abgeschieden werden, sondern liegt, da sie erst nach dem Umformprozess abgeschieden wird und somit nicht während des Umformprozesses beschädigt werden kann, auch bei dem fertigen Gehäuse als durchgängige Schicht, d.h. ohne kleine Öffnungen darin, vor. Eine solche durchgängige Korrosionsschutzschicht kann darunterliegende Metallbereiche des Gehäuses verlässlich vor einem Kontakt mit korrodierenden Substanzen schützen.

Das Verfahren kann insbesondere zur Fertigung von Batteriezellen-Gehäusen auf Basis von nickelbeschichtetem Stahlblech, insbesondere Hilumin®-Blech, eingesetzt werden. Das Stahlblech ist in diesem Fall bereits vor dem Umformen mit Nickel beschichtet. Die Nickelschicht soll als Korrosionsschutzschicht dienen. Beim Umformen des Stahlblechs bewirkte Beschädigungen der Nickelschicht können jedoch ohne negative Auswirkungen auf die Langlebigkeit der letztlich gebildeten Batteriezelle bleiben, da diese nach dem Umformen mithilfe der anschließend aufgebrachten zweiten Korrosionsschutzschicht abgedeckt werden.

Prinzipiell kann die Korrosionsschutzschicht aus unterschiedlichen Materialien bestehen. Es können anorganische oder auch organische Materialien eingesetzt werden. Die Korrosionsschutzschicht sollte zuverlässig an der Oberfläche des Metallblechs haften. Die Korrosionsschutzschicht sollte dabei ausreichend dicht sein, damit Feuchtigkeit und/oder Sauerstoff nicht mehr an die Oberfläche eines darunterliegenden Substrats, insbesondere eines Metallsubstrats bzw. konkret des Metallblechs, gelangen können. Alternativ oder ergänzend kann die Korrosionsschutzschicht aus einem Material, insbesondere einem Metall, bestehen, welches unedler als das Material des darunterliegenden Substrats ist, sodass Korrosion bevorzugt nicht an dem Substrat, sondern an der Korrosionsschutzschicht stattfindet.

Beispielsweise kann die nach dem Umformen aufgebrachte Korrosionsschutzschicht eine Metallschicht sein. Metallschichten können einfach und/oder zuverlässig aufgebracht werden und können als wirkungsvolle Schicht zur Vermeidung von Korrosion dienen. Das die Korrosionsschutzschicht bildende Metall kann unedler oder edler sein als das Metall des darunterliegenden Metallblechs.

Insbesondere kann die nach dem Umformen aufgebrachte Korrosionsschutzschicht eine Nickelschicht sein. Nickelschichten haben sich als besonders effizient für die Vermeidung von Korrosion herausgestellt. Sie sind außerdem kostengünstig und zuverlässig in industriellem Maße herstellbar.

Die Korrosionsschutzschicht kann insbesondere aus einer flüssigen Phase abgeschieden werden. Prinzipiell kann die Korrosionsschutzschicht zwar in beliebiger Weise erzeugt werden, beispielsweise durch Abscheiden aus einer Gasphase, Abscheiden aus einer Dampfphase, Aufsprühen, Aufdrucken, etc. Allerdings kann hierbei ein Risiko bestehen, dass die erzeugte Korrosionsschicht nicht ausreichend dicht ist. Beispielsweise kann es beim Aufdampfen einer Schicht im Bereich von Hinterschneidungen zu abgeschatteten Bereichen kommen, in denen nicht genügend Material zur Bildung der Korrosionsschicht abgelagert wird. Durch ein Abscheiden aus einer flüssigen Phase können solche Probleme weitestgehend vermieden werden. Aus der flüssigen Phase kann die Korrosionsschutzschicht zuverlässig gleichmäßig und dicht abgeschieden werden. Hierbei kann die Gehäusekomponente in die flüssige Phase eingetaucht werden, sodass die flüssige Phase die zu schützende Oberfläche der Gehäusekomponente bedeckt. Die abgeschiedene Schicht kann nach dem Aufbringen gegebenenfalls nachbehandelt werden, z.B. Tempern, Glühen, Härten etc.

Beispielsweise kann die Gehäusekomponente vollständig in die flüssige Phase eingetaucht werden. Die flüssige Phase bedeckt somit die gesamte Oberfläche der Gehäusekomponente und lagert sich an dieser ab. Sofern die Gehäusekomponente einen Hohlraum, in dem beispielsweise die Elektroden und der Elektrolyt aufzunehmen sind, in diesem Verfahrensstadium noch nicht dicht umschließt, dringt die flüssige Phase auch in den Hohlraum ein und lagert sich somit auch an einer Innenoberfläche der Gehäusekomponente ab.

Alternativ kann die Gehäusekomponente nur mit Teilbereichen in die flüssige Phase eingetaucht werden. Dabei werden nur diese Teilbereiche von der flüssigen Phase bedeckt und die Korrosionsschutzschicht lagert sich nur an diesen Teilbereichen ab. Hierdurch kann Material der Korrosionsschutzschicht eingespart werden, indem beispielsweise nur diejenigen Teilbereiche beschichtet werden, die als gefährdet für auftretende Korrosion angesehen werden.

Beispielsweise kann die Gehäusekomponente nur mit Teilbereichen in die flüssige Phase eingetaucht werden, die beim Umformen signifikant gekrümmt wurden. Unter "signifikant gekrümmt" kann hierbei ein krümmendes Umformen verstanden werden, bei dem das Metallblech derart stark verformt wird, dass daran vorgesehene Schichten einem übermäßigen mechanischen Stress ausgesetzt werden. Wann ein solcher Stress übermäßig wird, kann von verschiedenen Faktoren abhängen, beispielsweise von einer Geometrie der zu formenden gekrümmten Gehäusekomponente, Eigenschaften der bereits zuvor auf dem Metallblech abgeschiedenen Schichten, etc. Insbesondere an solchen signifikant gekrümmten Teilbereichen scheint ein erhöhtes Risiko zu bestehen, dass beispielsweise eine dort bereits zuvor abgeschiedene Korrosionsschutzschicht lokale Schädigungen aufweist. Durch das Abscheiden der Korrosionsschutzschicht nach dem Umformen durch das Eintauchen speziell dieser gefährdeten Teilbereiche in die flüssige Phase kann einerseits ein zuverlässiger Korrosionsschutz bewirkt werden. Andererseits wird nur wenig Material für die zusätzlich abzuscheidende Korrosionsschutzschicht benötigt.

Die nach dem Umformen erzeugte Korrosionsschutzschicht kann durch Elektroplattieren abgeschieden werden. Ein Abscheiden durch Elektroplattieren, manchmal auch als galvanisches Abscheiden bezeichnet, kann die zuverlässige Erzeugung einer sehr homogenen Korrosionsschutzschicht und somit dichten Korrosionsschutzschicht ermöglichen. Außerdem haften elektroplattierte Schichten meist gut an einem Trägermaterial.

Alternativ kann die nach dem Umformen erzeugte Korrosionsschutzschicht durch stromloses Plattieren abgeschieden werden. Beim stromlosen Plattieren braucht ein zu beschichtendes Substrat, im Gegensatz zum Elektroplattieren, nicht elektrisch kontaktiert und auf ein vorgegebenes elektrisches Potenzial gesetzt werden. Hierdurch kann sich der Beschichtungsprozess vereinfachen. Auch stromlos plattierte Schichten haften meist gut an einem Trägermaterial und bilden meist eine geschlossene und somit dichte Schicht.

Bei einem erfindungsgemäß hergestellten Gehäuse einer Batteriezelle ist zumindest die Oberfläche von Gehäusekomponenten in signifikant gekrümmten ersten Teilbereichen nicht nur durch die eventuell vorab bereits auf dem Metallblech abgeschiedene erste Korrosionsschutzschicht, sondern auch durch die nach dem Umformen ergänzend abgeschiedene zweite Korrosionsschutzschicht bedeckt. Die beiden Korrosionsschutzschichten können sich dabei voneinander dadurch unterscheiden, dass in der ersten Korrosionsschutzschicht, verursacht insbesondere durch den Umformprozess, Öffnungen in Form von durchgängigen Poren, Rissen, Spalten oder ähnlichem existieren können, wohingegen die darüberliegende zweite Korrosionsschicht durchgängig und somit dicht ist.

Sofern beim Fertigen des Gehäuses nicht die gesamte Gehäusekomponente mit der zweiten Korrosionsschutzschicht beschichtet wurde, sondern beispielsweise um Material zu sparen nur erste Teilbereiche ihrer Oberfläche mit der zweiten Korrosionsschutzschicht versehen wurden, kann die Gehäusekomponente daran angrenzend zweite Teilbereiche aufweisen, an denen ihre Oberfläche lediglich eine einlagige Korrosionsschutzschicht aufweist. Diese einlagige Korrosionsschutzschicht kann der bereits vor dem Umformen auf dem Metallblech vorhandenen Korrosionsschutzschicht entsprechen. Die einlagige Korrosionsschutzschicht weist dabei eine deutlich geringere Dicke auf als die doppellagige Korrosionsschutzschicht, bei der die einlagige Korrosionsschutzschicht durch die nach dem Umformen aufgebrachte zweite Schutzschicht ergänzt wurde. Die Dicken der einlagigen Korrosionsschicht und der zweilagigen Korrosionsschicht können sich um mehr als 10 %, vorzugsweise mehr als 20 % und stärker bevorzugt mehr als 50 % voneinander unterscheiden.

Das wie beschrieben gefertigte Gehäuse kann, wenn es zur Bildung einer Batteriezelle eingesetzt wird, die Langlebigkeit, insbesondere die Korrosionsbeständigkeit der Batteriezelle verbessern. Dies gilt insbesondere beim einem Einsatz bei Lithium-Ionen-Batteriezellen.

Es wird darauf hingewiesen, dass einige der möglichen Merkmale und Vorteile der Erfindung hierin mit Bezug auf unterschiedliche Ausführungsformen eines Verfahrens zum Fertigen eines Gehäuses einer Batteriezelle einerseits bzw. eines entsprechend gefertigten Gehäuses andererseits beschrieben sind. Die Merkmale können in geeigneter Weise kombiniert, angepasst oder ausgetauscht werden, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

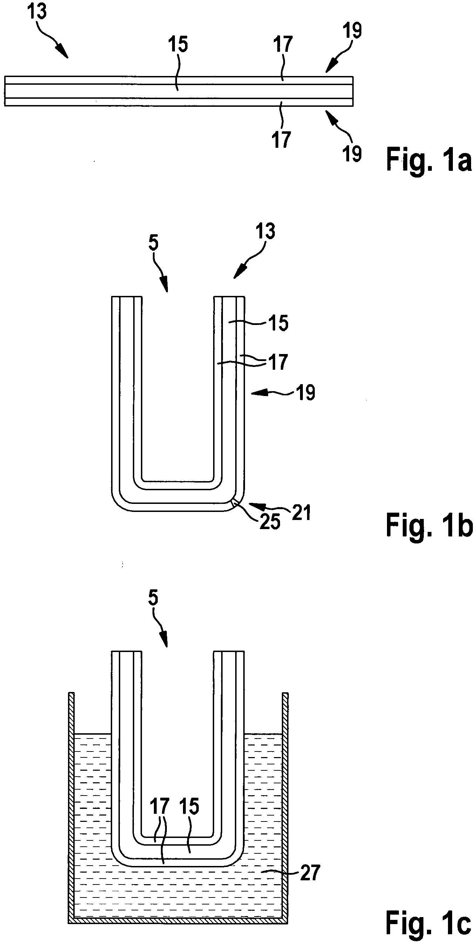

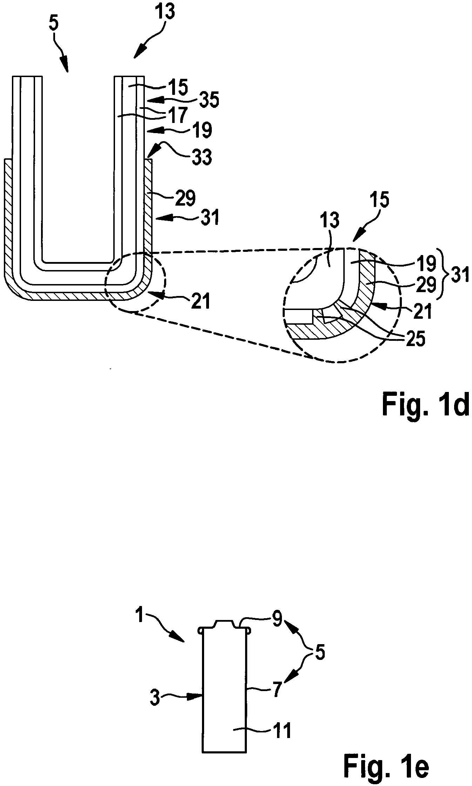

Fig. 1 zeigt Schritte eines Verfahrens zum Fertigen eines Gehäuses einer Batteriezelle gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Fig. 1 veranschaulicht aufeinanderfolgende Schritte (a) bis (e) eines erfindungsgemäßen Verfahrens zum Fertigen eines Gehäuses 3 einer Batteriezelle 1. Das Gehäuse 3 kann dabei aus mehreren Gehäusekomponenten 5 zusammengesetzt sein. Beispielsweise kann das Gehäuse 3 aus einem trogförmigen Behälter 7, der an einem Ende offen ist, und einem dieses Ende verschließenden Deckel 9 zusammengesetzt sein. die Gehäusekomponenten 5 sind dabei dicht miteinander verbunden, sodass sie ein Innenvolumen 11 hermetisch dicht umschließen. In dem Innenvolumen 11 können bei der fertigen Batteriezelle 1 andere Komponenten wie beispielsweise Elektroden und Elektrolyt (aus Übersichtlichkeitsgründen nicht dargestellt) aufgenommen sein.

Um das Gehäuse 3 bzw. eine der Gehäusekomponenten 5 herzustellen, wird in einem ersten Verfahrensschritt (a) ein Metallblech 13 bereitgestellt. Im dargestellten Beispiel besteht das Metallblech 13 aus einem Stahlblech 15, an dessen gegenüberliegenden Oberflächen jeweils eine als erste Korrosionsschutzschicht 19 wirkende Nickelschicht 17 abgeschieden wurde. Solche Metallbleche 13 werden als sogenannte Hilumin®-Bleche häufig zum Fertigen von Gehäusen für Batteriezellen eingesetzt.

In einem darauf folgenden Verfahrensschritt (b) wird das ursprünglich ebene Metallblech 13 umgeformt, um ihm eine gekrümmte Form zu geben. Beispielsweise kann das Metallblech 13 die Gehäusekomponente 5 in Form des trogförmigen Behälters 7 bilden. Das Metallblech 13 kann hierzu tiefgezogen werden. Insbesondere untenliegende Kanten und Ecken bilden dabei Teilbereiche 21, in denen das Metallblech 13 beim Umformen signifikant gekrümmt wurde. In diesen signifikant gekrümmten Teilbereichen 21 kann die zuvor abgeschiedene Nickelschicht 17 beim Umformen beschädigt worden sein, sodass sich darin Risse, Spalte oder andere Öffnungen 25 bilden. Es wird darauf hingewiesen, dass die durchgehenden Öffnungen beispielhaft als Öffnung 25 in Fig. 1(b) stark vergrößert dargestellt wurde und in den nachfolgenden Figuren, insbesondere in Fig. 1(c), der Einfachheit halber nicht explizit veranschaulicht sind.

Um zu vermeiden, dass an diesen Öffnungen 25 später lokale Korrosion auftritt, wird die Oberfläche der Gehäusekomponente 5 nachfolgend in einem Verfahrensschritt (c) zumindest in den Teilbereichen 21 mit einer zweiten Korrosionsschutzschicht 29 versehen. Die bereits umgeformte Gehäusekomponente 5 wird hierzu teilweise in eine flüssige Phase 27 eingetaucht. Die flüssige Phase 27 enthält Metallionen, welche sich durch Elektroplattieren oder stromloses Plattieren an der nach außen gerichteten Oberfläche der Gehäusekomponente 5 ablagern. Hierdurch kann eine Metallschicht, insbesondere eine weitere Nickelschicht als zweite Korrosionsschutzschicht 29 gebildet werden.

Bei der letztendlich gebildeten Gehäusekomponente 5, wie sie in Verfahrensschritt (d) dargestellt ist, bedeckt die nachträglich aufgebrachte zweite Korrosionsschutzschicht 29 zumindest in dem unteren Teilbereich 21, der während des Umformens signifikant gekrümmt wurde, die bereits zuvor an dem Metallblech 13 vorhandene erste Korrosionsschutzschicht 19. Wie in der vergrößerten Ansicht in Fig. 1(d) dargestellt, überdeckt die zweite Korrosionsschutzschicht 29 dabei die in der ersten Korrosionsschutzschicht 19 gebildeten Öffnungen 25 und verschließt diese somit.

Die aus der ersten Korrosionsschutzschicht 19 und der zweiten Korrosionsschutzschicht 29 gebildete doppellagige Korrosionsschutzschicht 31 kann somit Korrosion an der Gehäusekomponente 5 zuverlässig vermeiden. Dabei weist die doppellagige Korrosionsschutzschicht 31 eine erheblich größere Dicke auf als die lediglich aus der ersten Korrosionsschutzschicht 19 gebildete einlagige Korrosionsschutzschicht, die die Oberfläche der Gehäusekomponente 5 in zweiten Teilbereichen 35 bedeckt, die nach dem Umformen nicht mit der zweiten Korrosionsschutzschicht 29 beschichtet wurden. An einem Übergang zwischen der doppellagigen Korrosionsschutzschicht 31 und der einlagigen ersten Korrosionsschutzschicht 19 kann daher eine kleine Stufe 33 ausgebildet sein.

Mit dem beschriebenen Verfahren können Gehäuse für verschiedene Typen von Batteriezellen, beispielsweise Rundzellen oder prismatische Zellen, gefertigt werden.

## Patentansprüche

1. Verfahren zum Fertigen eines Gehäuses (3) einer Batteriezelle (1), wobei das Verfahren aufweist:
Bereitstellen eines Metallblechs (13);
Umformen des Metallblechs (13) in eine Gehäusekomponente (5) mit gekrümmter Form;
Zusammensetzen des Gehäuses (3) unter Einbeziehung der Gehäusekomponente (5);
**dadurch gekennzeichnet, dass**
die Gehäusekomponente (5) nach dem Umformen zumindest an Teilbereichen (21) ihrer Oberfläche mit einer Korrosionsschutzschicht (29) versehen wird.

2. Verfahren nach Anspruch 1, wobei das Metallblech (13) ein mit einer Nickelschicht (17) beschichtetes Stahlblech (15) ist.

3. Verfahren nach einem der vorangehenden Ansprüche, wobei die Korrosionsschutzschicht (29) eine Metallschicht ist.

4. Verfahren nach einem der vorangehenden Ansprüche, wobei die Korrosionsschutzschicht (29) eine Nickelschicht ist.

5. Verfahren nach einem der vorangehenden Ansprüche, wobei die Korrosionsschutzschicht (29) aus eine flüssigen Phase (27) abgeschieden wird.

6. Verfahren nach Anspruch 5, wobei die Gehäusekomponente (5) vollständig in die flüssige Phase (27) eingetaucht wird.

7. Verfahren nach Anspruch 5, wobei die Gehäusekomponente (5) nur mit Teilbereichen (21) in die flüssige Phase (27) eingetaucht wird.

8. Verfahren nach Anspruch 7, wobei die Gehäusekomponente (5) nur mit Teilbereichen (21), die beim Umformen signifikant gekrümmt wurden, in die flüssige Phase (27) eingetaucht wird.

9. Verfahren nach einem der vorangehenden Ansprüche, wobei die Korrosionsschutzschicht (29) durch Elektroplattieren abgeschieden wird.

10. Verfahren nach einem der vorangehenden Ansprüche 1 bis 8, wobei die Korrosionsschutzschicht (29) durch stromloses Plattieren abgeschieden wird.

11. Gehäuse (3) einer Batteriezelle (1), wobei das Gehäuse (3) wenigstens eine Gehäusekomponente (5) mit einer gekrümmten Form aufweist, wobei die Gehäusekomponente (5) zumindest in signifikant gekrümmten ersten Teilbereichen (21) an ihrer Oberfläche eine doppellagige Korrosionsschutzschicht (31) mit einer ersten Korrosionsschutzschicht (19) und einer darüberliegenden zweiten Korrosionsschutzschicht (29) aufweist, wobei die erste Korrosionsschutzschicht (19) lokale Durchgangsöffnungen (25) aufweist und die zweite Korrosionsschutzschicht (29) durchgängig ist.

12. Gehäuse nach Anspruch 11, wobei die Gehäusekomponente (5) in zweiten Teilbereichen (35) an ihrer Oberfläche eine einlagige Korrosionsschutzschicht (19) aufweist, welche eine geringere Dicke aufweist als die zweilagige Korrosionsschutzschicht (31).

13. Batteriezelle (1), insbesondere Lithium-Ionen-Batterie, mit einem Gehäuse (3) gemäß einem der Ansprüche 11 und 12.
